# EUROPEAN PATENT SPECIFICATION

(11) **EP 2 775 218 B1**
(45) Date of publication and mention of the grant of the patent: **06.05.2020**
(21) Application number: 14156714.9
(22) Date of filing: 26.02.2014
(51) Int. Cl.: F24D 3/08, F24D 19/10, F16K 51/00, F16K 17/00

(54) **Heat exchanger valve arrangement**
Wärmetauscherventilanordnung
Agencement de soupape d'échangeur de chaleur

(30) Priority: 05.03.2013 DK 201300116
(43) Date of publication of application: 10.09.2014
(73) Proprietor: Danfoss A/S, 6430 Nordborg (DK)
(72) Inventor: Vidiz, Tomaz, 1251 Moravce (SI); Zagar, Tomaz, 1357 Notranje Gorice (SI)
(74) Representative: Keil & Schaafhausen Patentanwälte PartGmbB

(56) References cited:
- EP-A1- 0 466 010
- WO-A1-2007/085255
- GB-A- 2 179 410

## Description

The present invention relates to a heat exchanger valve arrangement according to the preamble of claim 1.

An example of a heat exchanger valve arrangement is known from WO 2007/085255 A1. The first valve means and the second valve means allow a permanent flow of fluid. A temperature sensor is arranged at the outlet of the secondary side and the heat information is fed back to an actuator of the first valve means.

EP 0 466 010 A1 and GB 2 179 410 A show valve assemblies in which the first valve is in form of a three-way valve defining the direction of the flow of the supply heat fluid. GB 2 179 410 A discloses a heat exchanger valve arrangement according to the preamble of claim 1.

The invention will be described in the following in connection with a heat exchanger arrangement provided for supplying domestic hot water to a water tap. The water tap is connected to an output of the secondary side of the heat exchanger. The input of the secondary side of the heat exchanger is connected to a cold water supply. The primary side of the heat exchanger is connected to a district heating system having a supply line and a return line.

When hot water comes out of the tap, the same amount of cold water has to be supplied to the input of the secondary side of the heat exchanger.

Furthermore, the district heating medium has to be supplied to the primary side of the heat exchanger in order to heat the cold water entering the secondary side of heat exchanger to the desired temperature. To this end it is known to use two valve means. The first valve means is arranged in a line connected to the primary side of the heat exchanger controlling the flow of district heating medium into or out of the primary side of the heat exchanger. The second valve means are arranged in a line connected to the secondary side of the heat exchanger and control the supply of cold water to the secondary side of the heat exchanger.

The installation of both valve means in a heat exchanger arrangement is in some cases complicated and expensive.

The object underlying the invention is to simplify the installation of a heat exchanger valve arrangement. Another object is to increase its efficiency, thereby saving energy.

This object is solved with a valve arrangement comprising the features of claim 1.

In this way only one single valve unit has to be handled when the valve arrangement is to be mounted. The handling of a single unit is simpler than the handling of two or more units. Furthermore, when both valve means are arranged in a common valve unit, it is possible to position the two valve means relative to each other in a predetermined manner so that they can influence each other in a more convenient way.

Preferably, said first valve element and said second valve element both are moveable under the influence of a pressure difference between the input port and the output port of said second valve means. The pressure at the input port of the second valve means depends among others on the flow of water through the heat exchanger. When there is no flow of water through the secondary side of the heat exchanger, there is no pressure drop and therefore the pressure at the input port and at the output port of the second valve means are equal. On the other hand, when hot water is tapped, there is a flow of water through the secondary side of the heat exchanger and therefore a pressure drop occurs so that the pressure at the input port of the second valve means is higher than a pressure at the output port of the second valve means. The pressure at the input port of the second valve means therefore can open the second valve means. When hot water is tapped, the supply of domestic heating medium, e. g. domestic heating water, is necessary to the primary side of the heat exchanger. Therefore, it is possible to use the pressure at the input port of the second valve means to open the first valve means as well.

Preferably, said common valve unit comprises delay means for opening said second valve means only after opening of said first valve means. When there is no heat demand in the heat exchanger, there is no supply of the domestic heating medium to the primary side of the heat exchanger. Therefore, the domestic heating medium in the supply line to the primary side of the heat exchanger cools down a bit. This would have the adverse effect that a lot of water has to be tapped at the secondary side of the heat exchanger until the desired temperature of the hot water is reached. Using the present embodiment, hot domestic heating medium is supplied to the primary side of the heat exchanger a short time before hot water at the secondary side of the heat exchanger is tapped. Therefore, heat is supplied to the primary side of the heat exchanger before cold water can enter the secondary side of the heat exchanger. Therefore, no or less cold water is wasted.

Preferably, said first valve element and said second valve element are moveable along a common moving axis. This makes the construction of the valve unit simple. Furthermore, the valve unit can be made with a small size.

According to the invention, said second valve seat is moveable in an opening direction of said first valve element, said second valve seat being operatively connected to said first valve element. In this way, it is possible to delay the opening of the second valve means with respect to the opening of the first valve means. When a pressure acts on the second valve means, the second valve seats together with the second valve element is moved, keeping the second valve means closed. However, this movement is transmitted to the first valve element opening the second valve means only after opening the first valve means, the second valve means being opened by lifting the second valve element off the second valve seat.

According to the invention, said second valve seat is arranged on a membrane, said membrane being positioned between said second input port and said second output port. The use of a membrane is a simple way to move the second valve seat. The membrane is subjected to a pressure difference between the pressures at the second input port and the second output port. When this pressure difference indicates that hot water is tapped at the outlet of the secondary side of the heat exchanger, the membrane together with the valve seat is moved in an opening direction of the first valve means. During a first stage of this movement the second valve means keep closed, only the first valve means openes. Only after opening of a first valve means the second valve means can open.

According to the invention, said second valve seat is connected to holding means holding reaction means, said reaction means acting on said second valve element in a direction towards said second valve seat. Said reaction means can have the form of a spring or the like. When the valve seat is moved together with the membrane, the reaction means hold down the second valve element on the second valve seat, keeping the second valve means closed. However, the membrane generates a counter force against the pressure difference over the membrane. When the force created by the pressure difference on the membrane and the restoring forces of the membrane balance out each other, the second valve element can be lifted off the second valve seat against the force of the reaction means thereby opening the second valve means.

According to the invention, said first valve means is moveable against a force of restoring means having a spring-like characteristic. The restoring means as well can have the form of a spring. The spring like characteristic means that the counter force created by the restoring means increases with the opening movement of the first valve element.

Consequently, there is a further force acting against the movement of the second valve seat. When a balance between these forces is achieved, the pressure difference between the input port and the output port of the second valve means can act on the second valve element as soon as the force of the reaction means exceeds this pressure difference.

Preferably, said holding means have a cage-like form. In a simple way, said holding mean can have the form of a U, the base of the U supporting the reaction means. This U-shaped holding means is connected to the valve seat. As soon as the second valve element has been lifted off the second valve seat, water can flow through a gap between the second valve element and the second valve seat and can escape out of the holding means between the legs of the cage-shaped element. Apparently, there can be more than two legs.

Preferably a rod is arranged between said holding means and said first valve element. Such a rod is a simple element for transferring the movement of the membrane to the first valve element.

Preferred embodiments of the invention will now be described in more detail with reference to the drawing, where in:
- Fig. 1: is a schematic diagram showing a heat exchanger arrangement and
- Fig. 2: is a schematic cross sectional view through a valve arrangement, and
- Fig. 3 to 6: show the operation of the heat exchanger valve means, illustrated with a slightly modified embodiment of a heat exchanger valve means.

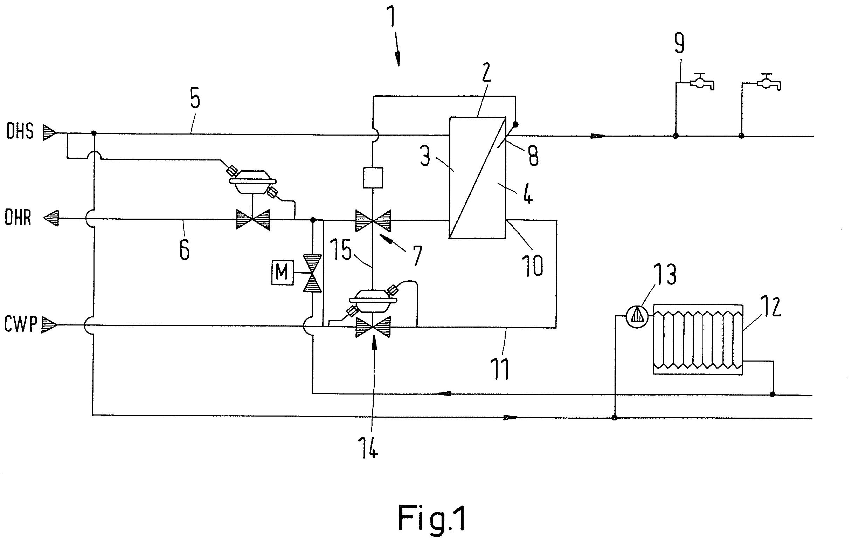

Fig. 1 shows in schematic form a heat exchanger arrangement 1 which is suitable for a sub-station such as to be used in housings to heat domestic water. However, the heat exchanger arrangement may equally well be used in any other system.

The heat exchanger arrangement 1 comprises a heat exchanger 2. The heat exchanger 2 comprises a primary side 3 and a secondary side 4. The primary side 3 is connected to a domestic heating supply line 5 which is connected to a domestic heating supply DHS. The primary side 3 of the heat exchanger 2 is furthermore connected to a domestic heating return line 6 which is connected to a domestic heating return connection DHR. First valve means 7 are arranged in the domestic return line 6. When the first valve means 7 are closed, there is no flow of domestic heating medium through the primary side 3 of the heat exchanger 2.

The secondary side 4 of the heat exchanger 3 comprises an output 8 which is connected to one or more taps 9 so that hot water can be taken from the taps 9. The secondary side 4 comprises an input 10 which is connected to a cold water supply line 11. The cold water supply line 11 is connected to a cold water port CWP.

In a manner known per se a radiator 12 having a control valve 13 is connected to the district heating supply line 5 and the district heating return line 6.

Second valve means 14 are arranged in the cold water supply line 11. The second valve means 14 are controlled by a pressure difference over the second valve means 14. When this pressure difference is zero or near zero, the second valve means 14 are closed. When there is a pressure difference over the second valve means 14, the second valve means 14 open to allow a flow of fluid through the secondary side 4 of the heat exchanger 2.

When the taps 9 are closed so that no hot water is removed from the secondary side of the heat exchanger 4, the pressure in the secondary side 4 of the heat exchanger 2 will correspond basically to the pressure at the cold water port CWP. In this case, there is no pressure difference over the second valve means 14. However, when water is tapped through the taps 9, there is a flow of water through the secondary side 4 of the heat exchanger, such flow causing a pressure drop so that there is a positive pressure difference over the second valve means 14, said pressure difference opening said second valve means 14.

The second valve means 14 and the first valve means 7 are operatively connected to each other as shown by a line 15. This means that the first valve means 7 open when there is a heat demand. Such a heat demand is generated when the second valve means 14 open since in this case cold water enters the secondary side 4 of the heat exchanger 2 and has to be heated.

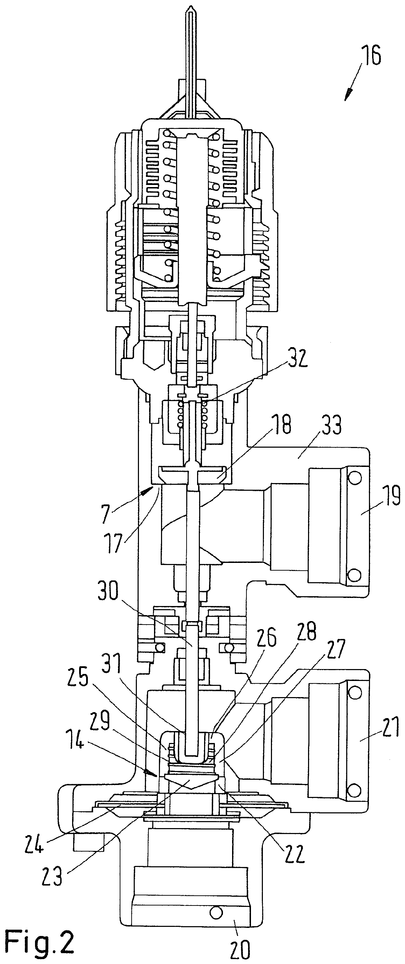

Fig. 2 shows a valve unit 16 combining the first valve means 7 and the second valve means 15.

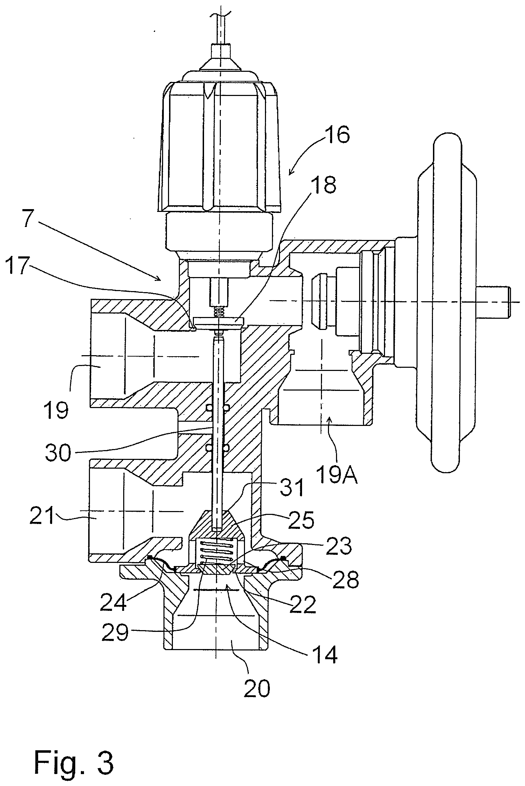

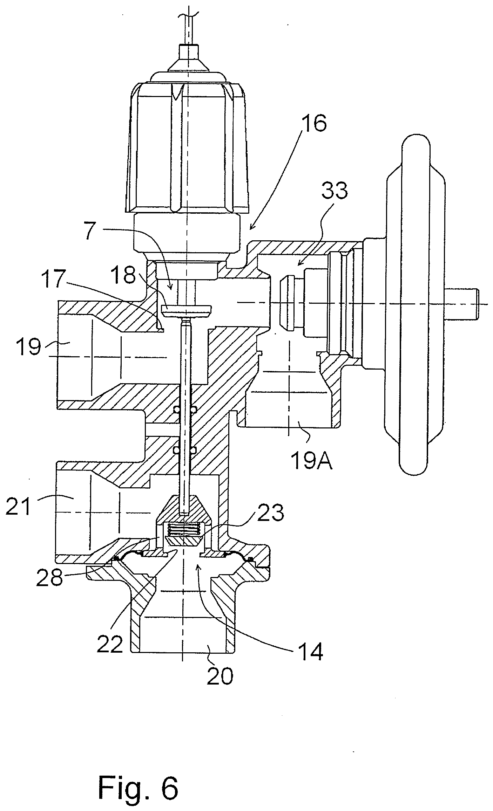

The first valve means 7 comprise a first valve seat 17 and a first valve element 18. The first valve seat 17 and the first valve element 18 are arranged between a first input port 19 and a first output port (19A Fig. 3 to 6) of the first valve means 7. In the position of the first valve element 18 relative to the first valve seat 17 shown in Fig. 2, the first valve means 7 are open allowing a flow from the first input port 19 to the first output port of the first valve means 7.

The second valve means 14 comprise a second input port 20 and a second output port 21. Furthermore, the second valve means 14 comprise a second valve seat 22 and a second valve element 23. In the condition shown in Fig. 2 the second valve element 23 rests again the second valve seat 22. The second valve means 14 are closed.

The second valve seat 22 is arranged on a membrane 24 which is positioned between the second input port 20 and the second output port 21. When a pressure difference is generated between the second input port 20 and the second output port 21, such pressure difference deforms said membrane 24 thereby moving the second valve seat 22 in a direction towards the first valve means 7. The second valve element 23 is moved together with the second valve seat 22.

The second valve seat 22 is connected to holding means 25, such holding means 25 having the shape of a U. This U-shape holding means has a base 26 and two legs 27. There can be more than these two legs 27, e. g. four legs, as long as an opening 28 remains through which water entering the interior of the holding means 25 can escape through such openings 28 in a direction to the second output port 21. Generally speaking, the holding means 25 have a cage-like form.

The holding means 25 hold a spring 29, said spring 29 urging said second valve element 23 in a direction towards the second valve seat 22. However, the spring 29 is used as an example. It is possible to use other reaction means.

The membrane 24 is connected to the first valve element 18 via the holding means 25 and a rod 30. The rod 30 is held in a recess 31 in the base 26 of the holding means 25. The rod 30 transmits a movement of the holding means 25 to the first valve element 18, i. e. it transforms a deformation of the membrane 24 into an opening movement of the first valve element 18.

The first valve element 18 is moved against the force of a spring 32 or any other restoring means having a spring like characteristic. A springslike characteristic means that the force of the restoring means increases with increasing distance of the first valve element 18 from the first valve seat 17.

The operation of the valve unit 16 can be described as follows in connection with Fig. 3 to 6:
Fig. 3 shows a situation in which the first valve means 7 and the second valve means are closed. No water is tapped.

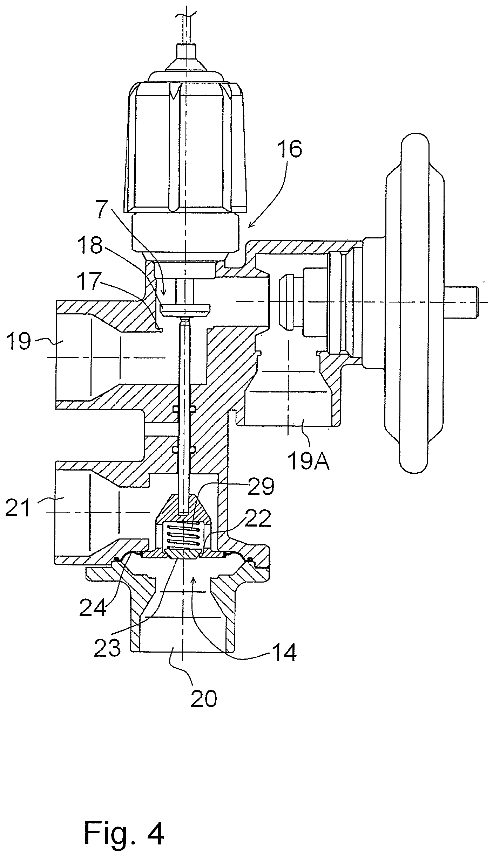

When water is taken out of the secondary side 4 of the heat exchanger, e. g. when one or more taps 9 are opened, the pressure at the second output port 21 decreases generating a pressure difference over the membrane 24. As it is illustrated in Fig. 4, the membrane 24 is deformed so that the second valve seat 22 is moved in a direction to the first valve means 7. This movement is transmitted via the rod 30 to the first valve element 18 lifting the first valve element 18 off the first valve seat 17 thereby opening the first valve means 7. At this stage the second valve element 23 still rests against the second valve seat 22 keeping closed the second valve means 14.

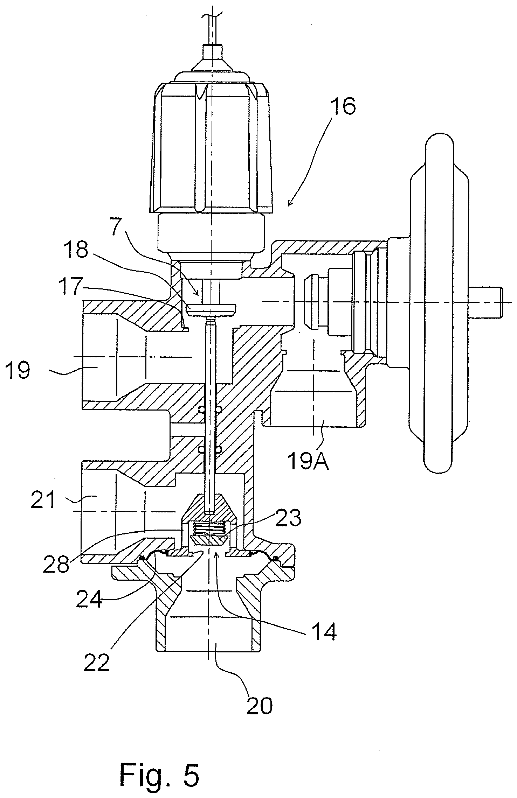

The deformation of the membrane 24 and the force of the spring 32 (or any other restoring means) create a counterforce which is directed against the force created by the pressure difference over the membrane 24. When the counterforce and the force created by the pressure difference balance each other, no further deformation of the membrane 24 and therefore no further movement of the second valve seat 22 are possible. The pressure difference now acts on the second valve element left 23 lifting said second valve elements 23 off the second valve seat 22 against the force of the spring 29 opening the second valve means 14, as it is shown in Fig. 5.

When both valve means 7, 14 are open the flow through the primary side 3 of the heat exchanger 2 can be controlled by a thermostat 33 or any other control means.

As soon as the flow through the second valve means 14 stops, the second valve means 14 close and the membrane 24 returns to the rest position shown in Fig. 3, so that the first valve means 7 close as well.

As it comes out from this explanation, the first valve means 7 are opened before the second valve means 14 can open. In this way it is possible to supply hot district heating medium to the primary side 3 of the heat exchanger 2 shortly before cold water flows through the secondary side 4 of the heat exchanger 2.

Since the connection between the first valve means 7 and the second valve means 14 is protected by the valve unit 16, more precisely by a housing 33 of the valve unit 16 the risk of a mal function is dramatically reduced.

## Claims

1. A heat exchanger valve arrangement comprising first valve means (7) to be arranged in a flow line (6) connected to a primary side (3) of a heat exchanger (2) and comprising a first input port (19) and a first output port and a first valve seat (17) and a first valve element (18) arranged between said first input port (19) and said first output port, said valve arrangement further comprising second valve means (14) to be arranged in a flow line (11) connected to a secondary side (4) of said heat exchanger (2) and comprising a second input port (20) and a second output port (21) and a second valve seat (22) and a second valve element (23) arranged between said second input port (20) and said second output port (21), wherein said first valve means (7) and said second valve means (14) are combined in a common valve unit (16), wherein said second valve seat (22) is moveable in an opening direction of said first valve element (18) and said second valve seat (22) is arranged on a membrane (24), said membrane (24) being positioned between said second input port (20) and said second output port (21), said second valve seat (22) is connected to holding means (25) holding reaction means (29), said reaction means (29) acting on said second valve element (23) in a direction towards said second valve seat (22), and wherein the valve arrangement comprises restoring means (32) and is arranged such that said first valve element (28) is moveable against a force of said restoring means (32) having a spring like characteristic, wherein said first valve means (7) close when the second valve means (14) close and the membrane (24) returns to the rest position, wherein said second valve seat (22) is operatively connected to said first valve element (18) and a pressure difference between the second input port (20) and the second output port (21) deforms the membrane (24) in a direction towards the first valve means (7), **characterized in that** the valve arrangement is arranged such that the second valve element (23) can be lifted off the second valve seat (22), when a force created by a pressure difference on the membrane (24) and a restoring force of the membrane (24) and the restoring means (32) balance out each other.

2. The valve arrangement according to claim 1, **characterized in that** said first valve element (18) and said second valve element (23) both are movable under the influence of a pressure difference between the second input port (20) and the second output port (21).

3. The valve arrangement according to claim 2, **characterized in that** said common valve unit (16) comprises delay means for opening said second valve means (14) only after opening of said first valve means (7).

4. The valve arrangement according to any of claims 1 to 3, **characterized in that** said first valve element (18) and said second valve element (23) are moveable along a common moving axis.

5. The valve arrangement according to any of claims 1 to 4, **characterized in that** said holding means (25) have a cage like form.

6. The valve arrangement according to any of claims 1 to 5, **characterized in that** a rod (30) is arranged between said holding means (25) and said first valve element (18).

## Patentansprüche

1. Wärmetauscherventilanordnung mit einer ersten Ventileinrichtung (7), die in einer mit einer Primärseite (3) eines Wärmetauschers (2) verbundenen Strömungsleitung (6) anzuordnen ist und einen ersten Eingangsanschluss (19) und einen ersten Ausgangsanschluss sowie einen ersten Ventilsitz (17) und ein erstes Ventilelement (18) aufweist, das zwischen dem ersten Eingangsanschluss (19) und dem ersten Ausgangsanschluss angeordnet ist, wobei die Ventilanordnung ferner eine zweite Ventileinrichtung (14) aufweist, die in einer Strömungsleitung (11) anzuordnen ist, die mit einer Sekundärseite (4) des Wärmetauschers (2) verbunden ist und einen zweiten Eingangsanschluss (20) und einen zweiten Ausgangsanschluss (21) sowie einen zweiten Ventilsitz (22) und ein zweites Ventilelement (23) aufweist, das zwischen dem zweiten Eingangsanschluss (20) und dem zweiten Ausgangsanschluss (21) angeordnet ist, wobei die erste Ventileinrichtung (7) und die zweite Ventileinrichtung (14) in einer gemeinsamen Ventileinheit (16) kombiniert sind, wobei der zweite Ventilsitz (22) in einer Öffnungsrichtung des ersten Ventilelements (18) bewegbar ist und der zweite Ventilsitz (22) auf einer Membran (24) angeordnet ist, wobei die Membran (24) zwischen dem zweiten Eingangsanschluss (20) und dem zweiten Ausgangsanschluss (21) angeordnet ist, der zweite Ventilsitz (22) mit einer Halteeinrichtung (25) verbunden ist, die eine Reaktionseinrichtung (29) hält, wobei die Reaktionseinrichtung (29) auf das zweite Ventilelement (23) in eine Richtung auf den zweiten Ventilsitz (22) wirkt, und wobei die Ventilanordnung eine Rückstelleinrichtung (32) aufweist und so angeordnet ist, dass das erste Ventilelement (28) gegen eine Kraft der Rückstelleinrichtung (32) mit einer federartigen Charakteristik bewegbar ist, wobei die erste Ventileinrichtung (7) schließt, wenn die zweite Ventileinrichtung (14) schließt und die Membran (24) in die Ruheposition zurückkehrt, wobei der zweite Ventilsitz (22) mit dem ersten Ventilelement (18) in Wirkverbindung steht und eine Druckdifferenz zwischen dem zweiten Eingangsanschluss (20) und dem zweiten Ausgangsanschluss (21) die Membran (24) in eine Richtung auf die erste Ventileinrichtung (7) verformt, **dadurch gekennzeichnet, dass** das zweite Ventilelement (23) von dem zweiten Ventilsitz (22) abgehoben werden kann, wenn eine durch eine Druckdifferenz auf die Membran (24) erzeugte Kraft und eine Rückstellkraft der Membran (24) und der Rückstellvorrichtung (32) sich gegenseitig ausgleichen.

2. Ventilanordnung nach Anspruch 1, **dadurch gekennzeichnet, dass** das erste Ventilelement (18) und das zweite Ventilelement (23) beide unter dem Einfluss einer Druckdifferenz zwischen dem zweiten Eingangsanschluss (20) und dem zweiten Ausgangsanschluss (21) bewegbar sind.

3. Ventilanordnung nach Anspruch 2, **dadurch gekennzeichnet, dass** die gemeinsame Ventileinheit (16) eine Verzögerungseinrichtung zum Öffnen der zweiten Ventileinrichtung (14) erst nach dem Öffnen der ersten Ventileinrichtung (7) aufweist.

4. Ventilanordnung nach einem der Ansprüche 1 bis 3, **dadurch gekennzeichnet, dass** das erste Ventilelement (18) und das zweite Ventilelement (23) entlang einer gemeinsamen Bewegungsachse bewegbar sind.

5. Ventilanordnung nach einem der Ansprüche 1 bis 4, **dadurch gekennzeichnet, daß** die Halteeinrichtung (25) eine käfigartige Form aufweist.

6. Ventilanordnung nach einem der Ansprüche 1 bis 5, **dadurch gekennzeichnet, dass** eine Stange (30) zwischen der Halteeinrichtung (25) und dem ersten Ventilelement (18) angeordnet ist.

## Revendications

1. Ensemble de soupape d'échangeur de chaleur comprenant un premier moyen de soupape (7) destiné à être installé dans une conduite d'écoulement (6) raccordée à un côté primaire (3) d'un échangeur de chaleur (2) et comprenant un premier orifice d'entrée (19) et un premier orifice de sortie et un premier siège de soupape (17) et un premier élément de soupape (18) installé entre ledit premier orifice d'entrée (19) et ledit premier orifice de sortie, ledit ensemble de soupape comprenant en outre un deuxième moyen de soupape (14) destiné à être installé dans une conduite d'écoulement (11) raccordée à un côté secondaire (4) dudit échangeur de chaleur (2) et comprenant un deuxième orifice d'entrée (20) et un deuxième orifice de sortie (21) et un deuxième siège de soupape (22) et un deuxième élément de soupape (23) installé entre ledit deuxième orifice d'entrée (20) et ledit deuxième orifice de sortie (21), dans lequel ledit premier moyen de soupape (7) et ledit deuxième moyen de soupape (14) sont combinés dans une unité de soupape commune (16), dans lequel ledit deuxième siège de soupape (22) est déplaçable dans une direction d'ouverture dudit premier élément de soupape (18) et ledit deuxième siège de soupape (22) est disposé sur une membrane (24), ladite membrane (24) étant positionnée entre ledit deuxième orifice d'entrée (20) et ledit deuxième orifice de sortie (21), ledit deuxième siège de soupape (22) est relié à un moyen de maintien (25) destiné à maintenir un moyen de réaction (29), ledit moyen de réaction (29) agissant sur ledit deuxième élément de soupape (23) dans une direction vers ledit deuxième siège de soupape (22), et dans lequel l'ensemble de soupape comprend un moyen de rappel (32) tout en étant conçu de telle façon que ledit premier élément de soupape (28) est déplaçable contre une force dudit moyen de rappel (32) présentant une caractéristique du genre ressort, dans lequel ledit premier moyen de soupape (7) se ferme lorsque le deuxième moyen de soupape (14) se ferme et que la membrane (24) revient vers la position de repos, dans lequel ledit deuxième siège de soupape (22) est fonctionnellement relié audit premier élément de soupape (18) et une différence de pression entre le deuxième orifice d'entrée (20) et le deuxième orifice de sortie (21) déforme la membrane (24) dans une direction vers le premier moyen de soupape (7), **caractérisé en ce que** l'ensemble de soupape est conçu de telle façon que le deuxième élément de soupape (23) peut être relevé du deuxième siège de soupape (22) lorsqu'une force créée par une différence de pression sur la membrane (24) et une force de rappel de la membrane (24) et du moyen de rappel (32) s'équilibrent entre elles.

2. Ensemble de soupape selon la revendication 1, **caractérisé en ce que** ledit premier élément de soupape (18) et ledit deuxième élément de soupape (23) sont tous deux déplaçables sous l'influence d'une différence de pression entre le deuxième orifice d'entrée (20) et le deuxième orifice de sortie (21).

3. Ensemble de soupape selon la revendication 2, **caractérisé en ce que** ladite unité de soupape commune (16) comprend un moyen de retardement permettant d'ouvrir ledit deuxième moyen de soupape (14) seulement après l'ouverture dudit premier moyen de soupape (7).

4. Ensemble de soupape selon l'une quelconque des revendications 1 à 3, **caractérisé en ce que** ledit premier élément de soupape (18) et ledit deuxième élément de soupape (23) sont déplaçables le long d'un axe de déplacement commun.

5. Ensemble de soupape selon l'une quelconque des revendications 1 à 4, **caractérisé en ce que** ledit moyen de maintien (25) présente une forme du genre cage.

6. Ensemble de soupape selon l'une quelconque des revendications 1 à 5, **caractérisé en ce qu'**une tige (30) est disposée entre ledit moyen de maintien (25) et ledit premier élément de soupape (18).
